# EUROPEAN PATENT APPLICATION

(11) **EP 2 165 613 A1**
(43) Date of publication of application: **24.03.2010**
(21) Application number: 08382036.5
(22) Date of filing: 19.09.2008
(51) Int. Cl.: A23L 3/3445, A23B 9/22, A01N 59/02, A01N 59/04, A01P 7/04

(54) **Process for eradication of pests in an agricultural product**

(71) Applicant: Sociedad española de carburos metalicos, S.A., 08009 Barcelona (ES)
(72) Inventor: Riudavets, Jordi, 08348 Cabrils (ES); Cabarra, Rosa, 08348 Cabrils (ES); Castañe, Cristina, 08348 Cabrils (ES); Alomar, Oscar, 08348 Cabrils (ES); Guri, Sonia, 08193 Bellaterra (ES); Sánchez, Javier, 08009 Barcelona (ES)
(74) Representative: Ponti Sales, Adelaida

(57) **Abstract**

The process of the invention comprises the steps of a) placing the agricultural product in a container; b) filling the container with a mixture of gases comprising CO₂, O₂ and SO₂, by means of flushing the mixture of gases or by means of creating a vacuum inside the container; and c) exposing the agricultural product to said mixture for a time ranging between 10 hours and 20 days, so that it permits the eradication of insects at any stage of their development.

This mixture comprises a concentration of CO₂ ranging from 45% to 90%; a concentration of O₂ ranging from 0.5% to 15%; and a concentration of SO₂ higher than 20 ppm, which mixture of gases is balanced preferably with N₂.

This process allows to significantly reducing treatment time to eradicate different insects in all of their development stages.

## Description

### FIELD OF THE INVENTION

This invention relates to a process for eradication of a wide range of pests in an agricultural product, particularly it relates to a process for the eradication of pests in all types of agricultural products susceptible to be infected by a pest.
This process allows to significantly reduce treatment time to eradicate different insects in all of their development stages being said agricultural products a cultivated product or a manufactured product such as a food product, a storage product and the like.

### BACKGROUND OF THE INVENTION

Modified atmospheres (MA) with a high carbon dioxide (CO₂) content are safe and environmentally friendly pest control process for raw and manufactured products.
Methyl bromide is a fumigant that has been used commercially for more than 50 years to control pests. The Montreal Protocol decided to phase it out on January 2005, particularly for foods products. For that reason, researchers have to find other solution to control pest in food products. Carbon dioxide is a good alternative to methyl bromide, phosphine and other treatments because no residues in final product, is a food additive, no safety interval after the treatment is required.
The main advantages of using high CO₂ content in a MA are that they are effective for the control of a wide range of pest species, and they can be used for the treatment of different products without an accumulation of toxic residues after the treatment. However, for example, control of insects in processed agricultural product by means of MA is sometimes too long for the marketing requirements of the industry. Data on the effects of different CO₂ types of treatments and dosages are available for many species and stages of stored product pests under many particular sets of conditions. The recommended exposure time to achieve complete pest control at the most appropriate gas concentration may take from several days to weeks, according to CO₂ concentration, developmental stage and species. Thus, with high carbon dioxide treatment, at atmospheric pressure, the time needed to kill insects is approximately 21 days (it depends on the kind of insect and insect stage).
On the other hand, sulphur dioxide (SO₂) is a gas accepted as a food additive (E-220). It has a large history as a food preservative due to its antimicrobial properties in a range of food products and beverages. Official dosages approved for the treatment of food products may range from 50ppm in cereal by-products, to 500ppm in nuts and 2000ppm in dried fruits.

Thus, the objective of this invention is to provide a process for the eradication of pests in an agricultural product wherein the exposure time be substantially reduced.

### BRIEF DESCRIPTION OF THE INVENTION

This invention relates to a process for eradication of pests in an agricultural product, **characterized in that** it comprises the steps of:
a) placing the agricultural product in a container;
b) filling the container with a mixture of gases comprising CO₂, O₂ and SO₂, by means of flushing the mixture of gases and removing the air inside the container, or by means of creating a vacuum inside the container and then filling the container with said mixture of gases;
c) exposing the agricultural product to the mixture of gases for a time that ranges between 10 hours and 20 days, so that it permits the eradication of insects at any stage of their development.

Preferably, the step c) is carried out at atmospheric pressure and at room temperature

In this invention, "flushing" is taken to mean displacing the air atmosphere inside the container by introducing a stream of the mixture of gases comprising CO₂, O₂ and SO₂, previously prepared.
In this invention, the term "agricultural product" refers to a cultivated product or a manufactured product such as a food product, a wood product, a stored product, like the cotton, or the tobacco, etc. The present invention is not restricted to an end product and therefore a raw product may also be treated with the claimed process. Then, the product may be stored until the moment of its distribution or until further processing is required.
In this invention, "eradication of insects at any stage of development" means the elimination of insects at any of the following stages of development: egg, larva or nymph, pupa and adult.
In this invention, "container" refers to any package or place, like a silo, wherein the agricultural product is susceptible to be introduced. The container used in the process of this invention should have barrier properties to gases so that the agricultural product be exposed to the mixture of gases during step c), and the selection of the type can be made between the large variety of containers for packaging agricultural products.
As mentioned above, the process described in this invention permits the eradication of the insects associated with the agricultural product, independently of the stage of development of said insects, with the product reaching the final user in an optimum condition.
The main advantageous aspect of the process of this invention lies in the fact that the process substantially reduces the exposure time. With this time reduction the manufacturers do not need to immobilize the product in the warehouse for long time, waiting for the effectiveness of the treatment. The product is ready to be sent to the supply chain in few hours or days and with the guarantee that no insects exist inside the product.

### FIGURES

Figure 1 shows the time-to-death curves for 70% CO₂, and 70% CO₂ and 35 ppm SO₂ applied to adults of *S*. *oryzae*;
Figure 2 shows SO₂ residual content with 70% CO₂ (5% O₂) and 3% SO₂ at 25°C;
Figure 3 shows SO₂ residual content from wheat flour fumigated with: 70% CO₂ (5% O₂) and different [SO₂]; Measurements made at after the treatment.

### DETALLED DESCRIPTION OF THE INVENTION

Particularly, the process for eradication of pests in an agricultural product according to the present invention uses a mixture of gases comprising a concentration of CO₂ ranging from 45% to 90%, preferably from 50% to 80%, more preferably from 65% to 75%; with a concentration of O₂ ranging from 0.5% to 15%, preferably from 5.1% to 12.5%, more preferably from 5.1% to 10.5%; and with a concentration of SO₂ higher than 20 ppm, preferably ranging from 30 ppm to 5%, more preferably from 30 ppm to 3%. The modified atmosphere (MA) with the composition of the mixture of gases can be balanced preferably with N₂, although other inert gases may be used with the same purpose.
Advantageously, the agricultural product is exposed to the mixture of gases for a time lower than 20 days, preferably lower than 15 days, more preferable lower than 5 days, and still more preferably lower than 1 day in order to eradicate the pest.
Surprisingly, according to the process of the present invention the addition of a low concentration of SO₂ in a modified atmosphere (CO₂ and O₂) increases the mortality of different types of pests in all stages of development when this process of eradication is compared to the mortality obtained with the same modified atmosphere but without SO₂. Therefore, the presence of SO₂ in a MA allows reducing the exposure time for eradicating a pest.
Moreover, the process of the present invention establishes for the first time that the presence of SO₂ in a mixture of gases of CO₂ and O₂ seems to have a strong effect on the mortality of a pest which allows to significantly reducing the exposure time for eradicating a pest from an agricultural product, specially in certains ranges of CO₂ concentration (see, for example, Table 1 and Table 3).

The process described in the present invention is particularly useful for the control of a wide variety of pests of agricultural products. Particular pests treated are Sitophylus oryzae, Tribolium confusum and Plodia interpunctella.

Now, the invention will be described in more detail making reference to the specific embodiments which are not intended to limit the scope of protection defined in the appended claims. Further, it would be evident for a person skilled in the art to modify or to replace particular components or materials used in the present embodiments in order to provide alternative embodiments, which are also included in the scope of the present invention when the technical character raised by them will be the same that one described in the present invention. Thus, any method for exposing the agricultural product to the mixture of gases can be used in the present invention due to the fact that the technical character raised by the present invention is not dependent on the type of the method selected.

### PREFERRED EMBODIMENTS OF THE INVENTION

### Operating conditions

*Sitophilus oryzae* used for the experiments came from colonies maintained on brown rice at IRTA (Cabrils, Barcelona). Experiments were conducted with adults and eggs. All laboratory studies were conducted in a climatic chamber at 25±1°C and 70±10% RH.

The experimental arenas were ventilated plastic cages (7.5 cm diameter and 3 cm high) containing 50g of brown rice. The sides of the arenas were painted with *Fluon*™ in order to avoid the escape of insects during the treatment.

Fifty adults were added to arenas. For obtaining eggs, adult weevils (1280 adults/kg of brown rice) were added and allowed to oviposit for 7 days. Afterwards, adults were removed with a 2.0 mm mesh sieve and rice with eggs was used for the experiments.

Two different experiments were carried out:
1. To evaluate the effectiveness of two high CO₂ modified atmospheres, 70% CO₂ and 95% CO₂, combined with SO₂ (0%, 35 ppm, 50 ppm, 150ppm and 3%) against adults and eggs of *S*. *oryzae*.
2. To evaluate the mortality responses of *S*. *oryzae* adults exposed to a modified atmosphere of 70% CO₂ with and without the addition of 35 ppm of SO₂ for a range of exposure times.

Insects were exposed to each gas mixture in sealed glass desiccators (200 mm diameter). Three cages of each stage were exposed in the same desiccators and five replications were made for each gas mixture and exposure time according to each experiment.

Gas mixtures were previously prepared in cylinders and gas concentration verified by the company that made up the gases mixtures (Carburos Metálicos S.A.). Modified atmospheres (+5% O₂) were balanced with N₂. Gas mixtures from the cylinders were continuously flushed into the desiccators at a pressure of 2 bars until the desired gas concentrations were reached. A gas analyzer (Abiss model TOM 12) was used to check the concentrations of CO₂ and O₂ inside the desiccators during the experiment.

After the treatment, desiccators were opened and cages were kept in a climatic chamber at 25±2°C of temperature and 70±10% r.h. To evaluate mortality on adults, the number of living adults in each cage was counted after 24-h. The percentage of mortality was calculated using the initial number of individuals placed in each cage. Sets of control cages were used to determine the percentage of natural mortality. For eggs, emerging weevil progeny was counted after 9 weeks. The number of living adults in each arena was counted and the percentage of mortality was calculated using the number of individuals emerged in the control cages. Results were subjected to one-way analysis of variance (ANOVA)(SAS System for Windows 8.02. SAS Institute, Cary, NC. 2001). For the second experiment, time-mortality data for each treatment were subjected to Probit analysis by the POLO-PC computer program (LeOra Software Polo Plus 1.0 2002-2007) to determine LT50, and their respective 95% confident intervals.

### SO₂ sorption and desorption in samples of rice, wheat flour and almonds

The experimental arenas were glass Petri dishes (9 cm diameter and 2 cm high) containing 25 g of three different food products: polished rice, wheat flour, and almonds. Three different gas mixtures were used: 70% CO₂ with 50ppm SO₂, 90% CO₂ with 150ppm SO₂, and 70% CO₂ with 3% SO₂. Gas mixtures with 5% O₂ were balanced with N₂.
Products were exposed to the modified atmosphere in sealed crystal desiccators (200 mm diameter). Three Petri dishes were exposed in the same desiccator to each gas mixture, except in the case of the mixtures containing 3% SO₂ where only one Petri dish was exposed in each desiccator. Four different exposure times were tested: 1, 2, 3 and 7 days. Three desiccators were used for each product and exposure time. Gas mixtures were previously prepared in cylinders and gas concentration verified as in the previous experiments. For the treatment, gas mixtures were continuously flushed through the desiccators for 2 minutes at a pressure of 2 bars. Desiccators were then kept in a climatic chamber at 25±1°C. After the treatment, a gas analyzer (Abiss model TOM 12) was used to check CO₂ and O₂ levels inside desiccators. SO₂ content in the food product was determined by the method of *Monier-Williams*. Analysis were conducted immediately after opening desiccators, and 3-h, 24-h and 7 days after the end of the treatment. Treated samples were held in the laboratory at room temperature. SO₂ levels in untreated control samples were also analyzed in three samples of rice and wheat flour, and six samples of almonds.

### Insect mortality

When exposed to a MA of 70% CO₂, the mortality rates of S. *oryzae* adults were strongly influenced by the addition of SO₂ (Table 1). Adding SO₂ significantly increased the percentage mortality from 7.8%, without SO₂, to 28% with 35ppm, to 62.7% with 50ppm and to total mortality when combined with 3% SO₂.

When increasing the CO₂ concentration from 70% to 95% and the exposure time from 20-h to 24-h, adult mortality in the treatments without SO₂ increased from 7.8% to 54.4%. However, the addition of 50ppm SO₂ to the 95% CO₂ MA did not increase the mortality when compared to the treatment without SO₂, as had been found with 70% CO₂ (Table 1). Only the addition of 150ppm of SO₂ resulted in a significant increase in mortality compared to the treatment without SO₂.

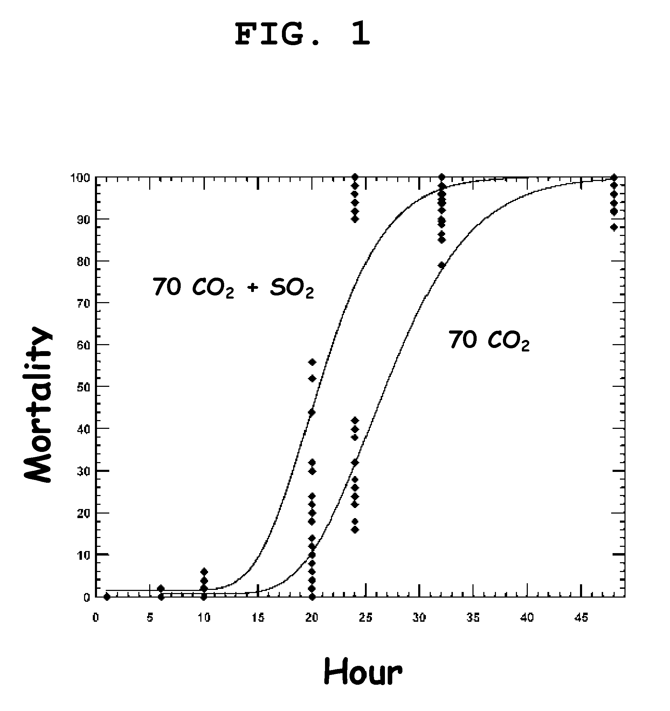

The mortality of adults exposed to a MA of 70% CO₂ with and without the 35ppm of SO₂ for a range of exposure times are given in Fig. 1. Time-to-death curves show that mortality of adults was higher for the range of 20-h to 48-h in presence of SO₂, although variability observed was high, mainly after 20 hours exposure. At the LT₅₀ level, adults exposed to the combination of SO₂ and CO₂ were more susceptible by approximately 6-h, than adults exposed to CO₂ alone (Table 2).

The reduction of adult emergence was significantly higher when exposed eggs to 70% CO₂ in combination with 35ppm of SO₂ than without SO₂ (Table 3). After 120 hours treatment, the number of emerging adults in each control cage averaged 237. When treated with 70% CO₂ the number of emerging adults was reduced to an average of 6.6 per cage, ranging from 6 to 10 in all cages. Only one adult in one cage emerged when treated with the same CO₂ modified atmosphere in combination with 35ppm of SO₂. No adult emergence was recorded at 70% CO₂ and 3% SO₂.

With the emergence of adults from egg exposure, the same trend was observed as with adult mortality, when increasing the CO₂ concentration form 70% to 95%, the addition of SO₂ did not reduce the emergence of *S*. *oryzae* in comparison to the non-SO₂ treatment (Table 3). Although nearly a reduction of 10% in emergence was observed in average between the highest SO₂ content (150ppm) and the treatment without SO₂, no significant differences were found among treatments according to the ANOVA.

**Table 1. Total mortality (mean ± SEM) of S. oryzae adults exposed to 70 % and 95 % CO₂ (+5% O₂) alone or in combination with different SO₂ concentrations (35ppm, 50ppm, 150ppm and 3%) during 20-h and 24-h, respectively.**

| | **Content of SO₂Mortality (%)** **70% CO₂** | **Mortality (%)** **95% CO₂** |
|---|---|---|
| 0ppm | 7.8 ± 1.22 d | 54.4 ± 3.71 b |
| 35ppm | 28.1 ± 5.93 c | - |
| 50ppm | 62.7 ± 11.35 b | 52.0 ± 3.13 b |
| 150ppm | - | 66.5 ± 3.04 a |
| 3% | 100 ± 0 a | - |

Means followed by the same letter in a given column indicate no significant difference between treatments (Tukey, n = 5, α=0.05).

**Table 2. Mortality responses (LT₅₀) of S. oryzae adults to 70% CO₂ (+5% O₂) and 70% CO₂ and 35 ppm SO₂ (+5% O₂) resulting from laboratory fumigations at 25°C**

| **Treatment** | χ**² (d.f.)** | **Slope±SE LT50 (hours)^{a}** | | |
|---|---|---|---|---|
| | 805.93 | 10.71 | | |
| 70% CO₂ | | | ^{±} 26.8 | (25.7-28.0) |
| | (88) | 0.33 | | |
| | 3202.3 | 8.99 | | |
| 70% CO₂ + 35ppm SO₂ | | | ^{±} 20.4 | (17.5-22.4) |
| | (103) | 0.36 | | |

| | | | | |
|---|---|---|---|---|
| ^{a}numbers in brackets give the 95% confidence range | | | | |

**Table 3. Adult emergence reduction (means ± SEM) of S. oryzae eggs exposed to 70% and 95 % CO₂ (+5% O₂) alone or in combination with different SO₂ concentrations (35ppm, 50ppm, 150ppm and 3%) during 5 days and 3 days, respectively.**

| **Content of SO₂** | **Emergence (%)** **70%** | **reduction Emergence (%)** **CO₂** | **reduction** **95% CO₂** |
|---|---|---|---|
| 0ppm | 97.2 | ± 0.22 b | 56.8 ± 3.10 a |
| 35ppm | 99.9 | ± 0.03 a | - |
| 50ppm | - | | 57.2 ± 1.36 a |
| 150ppm | - | | 64.8 ± 2.87 a |
| 3% | 100 | ± 0 a | - |

Means followed by the same letter in a given column indicate no significant difference between treatments (Tukey, n = 5, α=0.05)

Analysis of sulphur dioxide residues, specially for food products

The initial residues of SO₂ detected in almonds, wheat flour and rice before the treatments were 3.6 ± 1.85ppm, 23.6 ± 12.80ppm, and 0ppm, respectively.

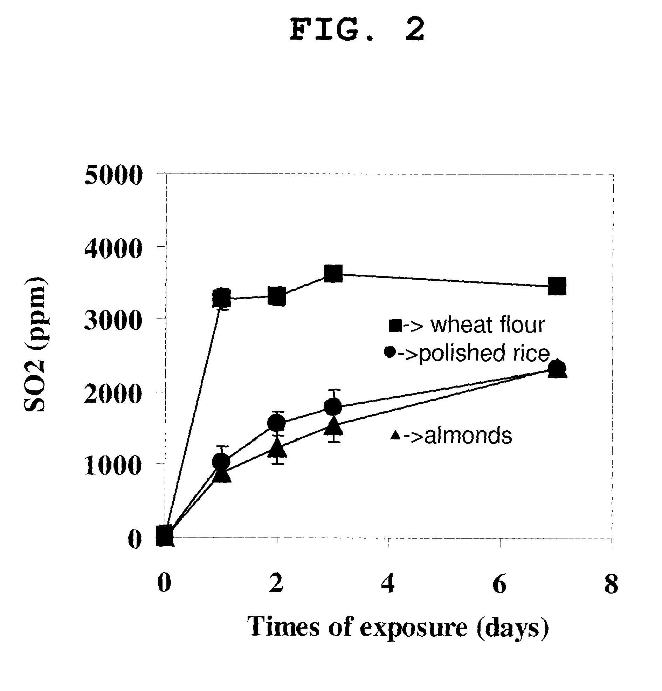

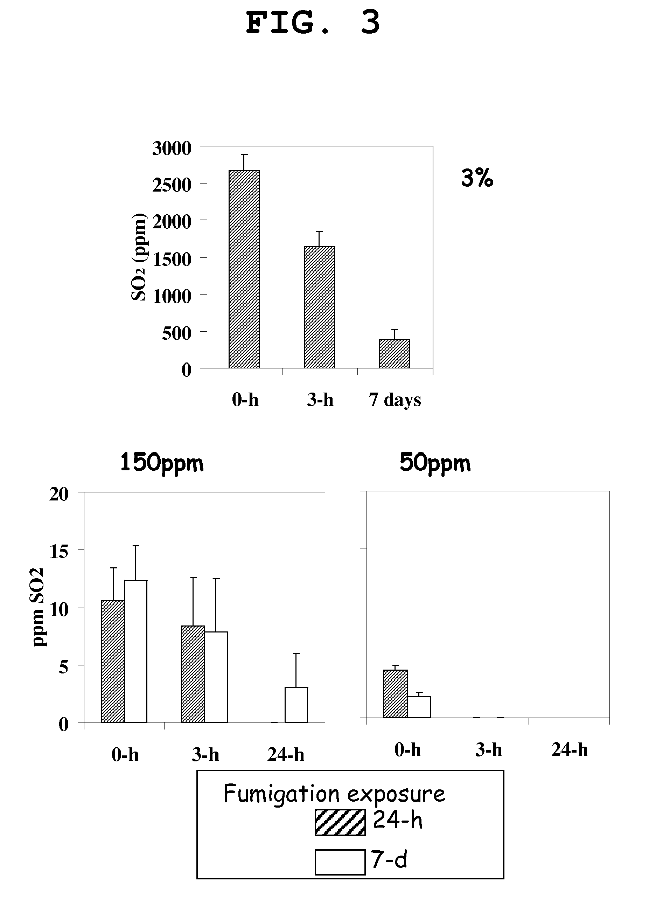

When treated with a MA of 3% SO₂, different sorption curves were observed for the three food products during the assay. Wheat flour reached the highest values (aprox. 3500ppm), and remained more or less stable from the third day of analysis onwards (Fig. 2). SO₂ adsorption of both almonds and rice steadily increased from the first day until the end of the study (to approx, 2300ppm). After aeration, a high degree of desorption was observed for wheat flour treated with 3% SO₂ (Fig 3). Values dropped from more than 2500ppm just after the treatment to around 400ppm after 7 days ventilation.

When treated with a low SO₂ content (150ppm and 50ppm), initial residual contents of SO₂ after the treatment were low. After 3-h and 24-h ventilation, the residual limits also decreased quickly even to the minimum detection limit of the technique.

In conclusion, the addition of a low concentration of SO₂ (from 35 ppm to 3%) in a MA of 70% CO₂ increased the mortality of *S. oryzae* adults and eggs compared to the mortality obtained with the same MA without SO₂. The highest level of SO₂ tested (3%) had a strong effect on mortality, while concentrations of 150ppm SO₂ or lower had less impact on mortality. In comparison, when increasing the CO₂ concentration form 70% to 95%, adult mortality and the reduction of egg emergence of *S. oryzae* were much less influenced by the addition of SO₂. Residual concentrations of SO₂ in wheat flour were low after the 150ppm and 50ppm SO₂ treatments. After 7 days aeration residual levels in all treatments were low or undetectable.

## Claims

1. Process for eradication of pests in an agricultural product, **characterized in that** it comprises the steps of:
a) placing the agricultural product in a container;
b) filling the container with a mixture of gases comprising CO₂, O₂ and SO₂, by means of flushing the mixture of gases or by means of creating a vacuum inside the container;
c) exposing the agricultural product to the mixture of gases for a time that ranges between 10 hours and 20 days, so that it permits the eradication of insects at any stage of their development.

2. Process for eradication of pests according to claim 1, **characterized in that** said mixture of gases comprises a concentration of CO₂ ranging from 45% to 90%, preferably from 50% to 80%, more preferably from 65% to 75%.

3. Process for eradication of pests according to claim 1, **characterized in that** said mixture of gases comprises a concentration of O₂ ranging from 0.5% to 15%, preferably from 5.1% to 12.5%, more preferably from 5.1% to 10.5%.

4. Process for eradication of pests according to claim 1, **characterized in that** said mixture of gases comprises a concentration of SO₂ higher than 20 ppm, preferably ranging from 30 ppm to 5%, more preferably from 35 ppm to 3%.

5. Process for eradication of pests according to claim 1, **characterized in that** comprising said mixture of gases CO₂, O₂ and SO₂, it is balanced with an inert gas.

6. Process for eradication of pests according to claim 5, wherein said inert gas is nitrogen (N₂).

7. Process for eradication of pests according to claim 1, **characterized in that** said mixture of gases is exposed to the agricultural product for a time lower than 20 days, preferably lower than 15 days, more preferable lower than 5 days, and still more preferably lower than 1 day.

8. Process for eradication of pests according to claim 1, **characterized in that** step c) is carried out at atmospheric pressure and at room temperature.

9. Process for eradication of pests according to claim 1, **characterized in that** said insect is Sitophylus oryzae.

10. Process for eradication of pests according to claim 1, **characterized in that** said insect is Tribolium confusum.

11. Process for eradication of pests according to claim 1, **characterized in that** said insect is Plodia interpunctella.

12. Process for eradication of pests according to claim 1, **characterized in that** said agricultural product is a stored product.

13. Process for eradication of pests according to claim 1, **characterized in that** said agricultural product is a food product.
